# EUROPÄISCHE PATENTSCHRIFT

(11) **EP 2 409 185 B1**
(45) Veröffentlichungstag und Bekanntmachung des Hinweises auf die Patenterteilung: **29.11.2017**
(21) Anmeldenummer: 10708195.2
(22) Anmeldetag: 11.03.2010
(51) Int. Cl.: G02B 6/255, G02B 6/38

(54) **VORRICHTUNG UND VERFAHREN ZUM SPLEISSEN VON LICHTWELLENLEITERN, SOWIE VERWENDUNG EINES ENDSTÜCKES IN EINER VORRICHTUNG ZUM SPLEISSEN**
DEVICE AND METHOD FOR SPLICING FIBER OPTIC LINES AND USE OF AN END PIECE IN A DEVICE FOR SPLICING
DISPOSITIF ET PROCÉDÉ D'ÉPISSURAGE DE FIBRES OPTIQUES, AINSI QU'UTILISATION D'UNE EXTRÉMITÉ DANS UN DISPOSITIF D'ÉPISSURAGE

(30) Priorität: 20.03.2009 CH 432092009
(43) Veröffentlichungstag der Anmeldung: 25.01.2012
(73) Patentinhaber: Diamond SA, 6616 Losone (CH)
(72) Erfinder: ROSSETTO, Aaron, CH-6600 Muralto (CH)
(74) Vertreter: Hepp Wenger Ryffel AG
(86) Internationale Anmeldenummer: PCT/EP2010/053071
(87) Internationale Veröffentlichungsnummer: WO 2010/105959

(56) Entgegenhaltungen:
- WO-A-2004/001471
- WO-A1-2008/059843
- WO-A2-2008/030432
- DE-A1-102006 036 330
- DE-U1-202007 009 480
- US-A1- 2008 181 563

## Beschreibung

Die vorliegende Erfindung betrifft eine Vorrichtung und ein Verfahren zum Spleissen von Lichtwellenleitern, sowie eine Verwendung eines Endstückes in einer Vorrichtung zum Spleissen.

Es sind bereits zahlreiche Vorrichtungen zum Spleissen von Lichtwellenleitern bekannt und gebräuchlich. All diesen Vorrichtung ist gemeinsam, dass nach dem Spleissen die Spleissverbindung aus der Vorrichtung herausgenommen werden muss und in einem zusätzlichen Schritt diese Spleissverbindung mit einer mechanischen Schutzvorrichtung versehen werden muss. Da die zu spleissenden Lichtwellenleiterenden vor dem Spleissen von jeglichem Aussenmantel und jeglicher Schutzhülle befreit werden müssen, sind die so freigelegten Lichtwellenleiterenden und insbesondere die Spleissverbindung zerbrechlich und sehr empfindlich gegenüber unsachgemässer Behandlung.

Beispielsweise zeigt DE 10 2006 036 330 A1 ein portables Spleissgerät mit Haltevorrichtungen zur Aufnahme von zwei miteinander zu verspleissenden Lichtwellenleiterabschnitten. Nach dem Spleissen werden die Lichtwellenleiterabschnitte aus den Haltevorrichtungen genommen und mittels eines drehbaren Bügels einem Schrumpfofen zugeführt.

WO 2004/001471 A1 offenbart ein Verfahren zum Spleissen zweier Lichtwellenleiterenden, wobei das eine Lichtwellenleiterende in einem Steckerteil vormontierte ist. Dabei werden eine Stifthalterung des Steckerteils und ein Kabelende derart eingespannt, dass die beiden Lichtwellenleiterenden koaxial auf einem Zentrierblock einander gegenüber liegen. Nach dem Spleissen werden die Stifthalterung und das Kabelende im eingespannten Zustand vom Zentrierblock entfernt, insbesondere angehoben. Anschliessend wird ein mechanischer Schutz auf die Spleissstelle aufgebracht. Nachteilig an diesem Verfahren ist, dass die ungeschützte Spleissstelle bewegt werden muss, was leicht zu einer Beschädigung der Spleissstelle führen kann.

Es ist daher eine Aufgabe der Erfindung, eine Vorrichtung und ein Verfahren zur Verfügung zu stellen, welche nach dem Spleissen ein Aufbringen eines mechanischen Schutzes auf die Spleissverbindung ohne separates Handling der gespleissten Lichtwellenleiter ermöglicht. Diese Aufgabe wird durch die Vorrichtung und das Verfahren mit den Merkmalen der Ansprüche 1 und 11 gelöst. Eine erfindungsgemässe Vorrichtung zum Spleissen von Lichtwellenleitern weist eine erste und eine zweite Halterung zur direkten oder indirekten Aufnahme von wenigstens je einem Lichtwellenleiter auf. So ist es beispielsweise denkbar, dass der Lichtwellenleiter in einem Zwischenstück aufgespannt wird und das Zwischenstück in der Halterung aufgenommen wird. Ein solches Zwischenstück kann beispielsweise ein Verbinder oder ein Verbinderteil sein. Alternativ ist es auch denkbar, dass das Zwischenstück aus einem Mantel eines Lichtwellenleiterkabels besteht. Die Vorrichtung weist weiter ein Ausrichtmittel auf, welches der präzisen Ausrichtung der Enden der in den Halterungen aufgenommenen Lichtwellenleiter dient. Ein solches Ausrichtmittel kann beispielsweise eine V-Nut aufweisen. Ausserdem weist die Vorrichtung Elektroden auf, welche sich im Bereich der aufeinander ausgerichteten Enden der Lichtwellenleiter befinden. Zum Erzeugen der Spleissverbindung werden die Elektroden an eine Hochspannungsquelle angeschlossen, sodass ein Lichtbogen zwischen den Elektroden entsteht. Die beiden Halterungen einerseits und das Ausrichtmittel und die Elektroden andererseits sind derart zwischen einer Spleissposition und einer Freistellposition relativ zueinander bewegbar, dass in der Freistellposition die Spleissverbindung freigestellt und somit für weitere Bearbeitungsschritte frei zugänglich ist. Dabei ist es irrelevant ob sich die beiden Halterungen gleichzeitig von den Elektroden und dem Ausrichtmittel wegbewegen, oder ob sich die Elektroden und das Ausrichtmittel von den beiden Halterungen entfernen. Weiter ist es auch denkbar, dass das Ausrichtmittel in die eine Richtung von den beiden Halterungen wegbewegbar ist und die Elektroden in andere Richtungen wegbewegt werden. Neben einer geradlinigen Bewegung, welche in jede der drei Achsen erfolgen kann, sind auch Schwenkbewegungen um eine feststehende Achse oder sogar Kombinationen davon denkbar.

In Freistellposition ist die Spleissverbindung bezogen auf die Längsachse der Lichtwellenleiter praktisch über einen Winkel von 360° freigestellt und zugänglich. Ersichtlicherweise können so Schutzhüllen oder dergleichen aufgebracht werden, solange die Lichtwellenleiter noch fest eingespannt sind. Auch eine Inspektion der Spleissverbindung vor Entfernen aus der Vorrichtung wird wesentlich erleichtert.

Vorteilhaft sind beispielsweise das Ausrichtmittel und die Elektroden auf einem zwischen den Halterungen gelagerten Spleissmodul angeordnet. Durch ein Wegbewegen dieses Spleissmoduls von den relativ feststehenden Halterungen werden somit Ausrichtmittel und Elektroden gleichzeitig bewegt. Vorzugsweise wird dabei das Spleissmodul abgesenkt. Ebenfalls denkbar sind Bewegungskombinationen wie Absenken und Verschieben oder Verschwenken und Verschieben möglich. Andere Bewegungskombinationen sind nicht ausgeschlossen. Die relativ feststehenden Halterungen haben den Vorteil, dass eingespannte Lichtwellenleiter-Kabel nicht bewegt werden müssen. Auch aus Gründen der Standfestigkeit des Gerätes ist es vorteilhaft, wenn das Spleissmodul nach unten, also gegen die Standfläche gepresst wird.

Vorzugsweise wird das Spleissmodul gegen eine Vorspannkraft von der Spleissposition in die Freistellposition bewegt. Ausserdem ist es vorteilhaft wenn das Spleissmodul in der Freistellposition arretierbar ist. Hierfür kann das Spleissmodul beispielsweise in der Spleissposition mit einer Feder vorgespannt sein und mit einer einfachen Schnappfunktion in der Freistellposition arretiert werden. Alternativ kann eine Kombination aus Feder und Stossdämpfer eingesetzt werden, wobei der Stossdämpfer so ausgebildet ist, dass in der Freistellposition das Stossdämpferventil verschlossen wird. Es kann sowohl ein hydraulischer als auch pneumatischer oder mechanischer Stossdämpfer zum Einsatz kommen. Es hat sich als vorteilhaft erwiesen, wenn eine Arretiervorrichtung zum Arretieren in der Freistellposition verwendet wird, welche bei Druck gegen die Vorspannkraft die Arretierung automatisch löst. Dem Fachmann sind neben der bekannten Kugelschreibermechanik auch andere Lösungen bekannt. Mit Hilfe dieser Anordnung kann das Spleissmodul sofort wieder in die Spleissposition zurück bewegt werden. Selbstverständlich wäre auch eine motorische Verschiebung der Bauteile möglich.

Die Halterungen zur Aufnahme der Lichtwellenleiter können je auf einer Trägereinheit angeordnet und lösbar mit dieser verbunden sein. Eine solche lösbare Verbindung stellt beispielsweise eine Schraubverbindung dar. Alternative Lösungen, beispielsweise Kombinationen aus Positionierstiften, Magnetverbindungen und Sicherungshebel sind ebenfalls denkbar und dem Fachmann bekannt. So können die Halterungen rasch ausgetauscht werden, wenn die Vorrichtung für andere Lichtwellenleiter umgerüstet werden soll. Die Trägereinheiten können auf Ebenen liegen, welche relativ zueinander kippbar sind. Somit wird eine Winkelstellung zwischen den Lichtwellenleitern ermöglicht. Diese Winkelstellung erleichtert das Ausrichten der Enden der Lichtwellenleiter mittels des Ausrichtmittels.

Die Trägereinheiten sind dabei an einer horizontalen Drehachse, welche senkrecht zu den Achsen der in den Halterungen aufzunehmenden Lichtwellenleiter steht, gelagert. Dabei hat es sich gezeigt, dass ein Winkel zwischen den Achsen der zu spleissenden Lichtwellenleiter zwischen 170° und 180°, insbesondere zwischen 174° und 178° vorteilhaft ist.

Die Trägereinheiten können derart mit dem Bewegungsmechanismus zum Erreichend der Freistellposition in Wirkverbindung stehen, dass die Trägereinheiten beim Bewegen von der Freistellposition in die Spleissposition verkippen. Durch diese Wirkverbindung wird die genannte Winkelstellung automatisch ohne Beeinflussung durch den Benutzer sichergestellt.

Eine der beiden Halterungen kann eine Ausnehmung aufweisen, in der ein Endstück passgenau aufnehmbar ist. Unter passgenau wird dabei verstanden, dass das Endstück in der Halterung spielfrei aufgenommen und fixiert wird, ohne jedoch das Endstück komplett zu umschliessen. Dieses Endstück enthält einen Lichtwellenleiter, welcher vorzugsweise vorkonfektioniert ist. So kann beispielsweise ein Steckerteil mit einem vorkonfektionierten Lichtwellenleiterstummel von der Ausnehmung aufgenommen werden. Dabei sind dieses Steckerteil und der Lichtwellenleiter so vorzubereiten, dass ein Ende des Lichtwellenleiters im Bereich der Elektroden zu liegen kommt.

In einem erfindungsgemässen Verfahren zum Spleissen von Lichtwellenleitern mit einer Vorrichtung zum Spleissen werden Lichtwellenleiter direkt oder indirekt in eine erste und eine zweite Halterung der Vorrichtung eingelegt. Weiter werden die Enden der in den Halterungen eingelegten Lichtwellenleiter in einem Ausrichtmittel aufeinander ausgerichtet. Durch Erzeugen eines Lichtbogens zwischen zwei Elektroden wird eine Spleissverbindung durch Spleissen der Enden der Lichtwellenleiter erstellt. Nach dem Spleissen wird die Spleissverbindung durch eine Relativbewegung der beiden Halterungen einerseits und dem Ausrichtmittel und der Elektroden andererseits zwischen einer Spleissposition und einer Freistellposition freigestellt. Jetzt kann ein mechanischer Schutz auf die Spleissverbindung aufgebracht werden. Als letzten Schritt werden die Lichtwellenleiter aus den Halterungen der Vorrichtung entnommen. Dadurch, dass nach dem Spleissen die Spleissverbindung freigestellt und mit einem mechanischen Schutz versehen wird, kann diese ohne Gefahr der Beschädigung der Spleissverbindung oder der Lichtwellenleiter durch unsachgemässe Behandlung aus der Vorrichtung entnommen werden.

Es hat sich als vorteilhaft erwiesen, dass vor und während dem Aufbringen des mechanischen Schutzes die Lichtwellenleiter einer vordefinierten Zugspannung ausgesetzt werden. Dadurch kann sichergestellt werden, dass die Lichtwellenleiter und insbesondere auch die Spleissverbindung optimal, insbesondere im gestreckten Zustand vom mechanischen Schutz umhüllt werden.

Für das Freistellen der Spleissverbindung nach dem Spleissen kann das Ausrichtmittel und vorzugsweise die Elektroden abgesenkt werden. Es ist jedoch auch denkbar, dass nur das Ausrichtmittel abgesenkt und die Elektroden seitlich verschoben werden. Selbstverständlich sind auch andere Bewegungskombinationen denkbar.

In einer vorgenannten Vorrichtung zum Spleissen von Lichtwellenleitern kann insbesondere ein Endstück verwendet werden, welches einen im Endstück vorkonfektionierten und einseitig am Endstück zugänglichen Lichtwellenleiter, sowie Mantelteile aufweist, welche mit dem Endstück verbindbar oder mit diesen über ein Gelenk verbunden sind. Dabei werden die Mantelteile in der Freistellposition nach dem Spleissen um die Spleissverbindung geschlossen und miteinander verbunden.

Weitere Einzelmerkmale und Vorteile der Erfindung ergeben sich aus der nachstehenden Beschreibung eines Ausführungsbeispiels und aus den Zeichnungen. Es zeigen:
- **Figur 1:**: eine perspektivische Ansicht einer erfindungsgemässen Vorrichtung mit geöffnetem Schutzdeckel,
- **Figur 2:**: einen Schnitt durch die Vorrichtung gemäss Figur 1 entlang der Achse der Elektroden,
- **Figur 3:**: einen Schnitt durch die Vorrichtung gemäss Figur 1 entlang der Achsen der Lichtwellenleiter, wobei die Vorrichtung in Spleissposition dargestellt ist,
- **Figur 4:**: den Schnitt gemäss Figur 3, wobei die Vorrichtung in der Freistellposition dargestellt ist,
- **Figur 5:**: ein vorkonfektioniertes Lichtwellenleiter-Endstück vor dem Einlegen in eine Halterung,
- **Figur 6a:**: eine Ansicht auf eine Halterung für ein Endstück mit geöffneter Verschlussklappe, ,
- **Figur 6b:**: eine Ansicht auf die Halterung gemäss Figur 6a, wobei die Verschlussklappe geschlossen ist,
- **Figur 7:**: eine vergrösserte Ansicht der Vorrichtung gemäss Figur 1, wobei der Schutzdeckel und die Verschlussklappen der Halterungen entfernt sind,
- **Figur 8:**: die Ansicht gemäss Figur 8, wobei sich die Vorrichtung in der Freistellposition befindet,
- **Figur 9:**: die Ansicht gemäss Figur 9, wobei die Mantelteile des Endstückes um die Spleissstelle verschlossen sind, und
- **Figur 10:**: eine vergrösserte Ansicht des Arbeitsbereiches der Vorrichtung gemäss Figur 1, wobei der Faserniederhalter des Schutzdeckels separat eingezeichnet ist.

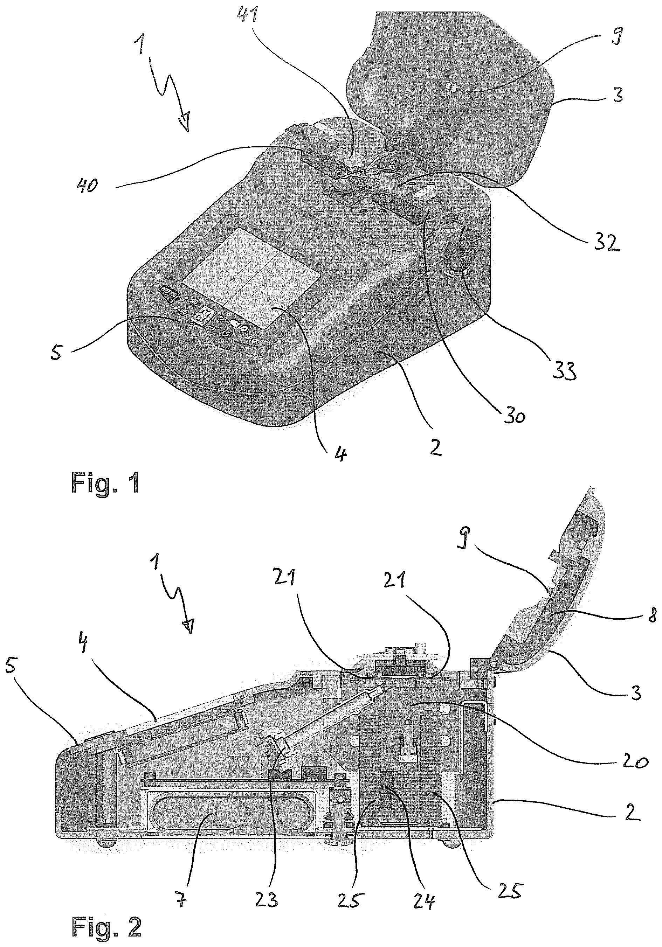

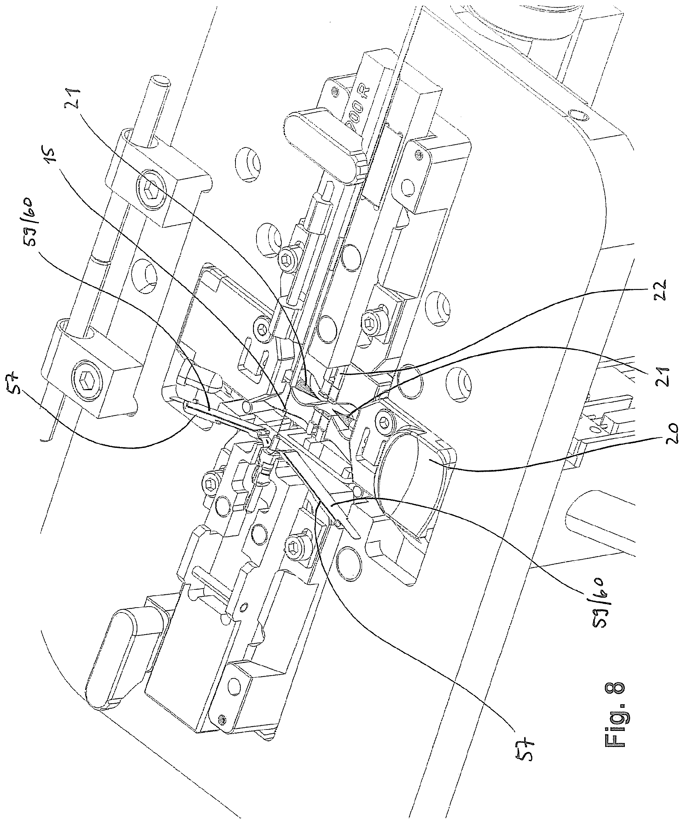

**Figur 1** zeigt eine Ansicht einer erfindungsgemässen Vorrichtung 1 mit einem Gehäuse 2 und geöffnetem Schutzdeckel 3. Frontseitig am Gehäuse 2 ist eine Anzeige 4 und eine Bedieneinheit 5 angebracht. Im Arbeitsbereich sind zwei Halterungen 30, 40 zu erkennen. Die Halterung 40 ist so ausgeführt, dass sie ein vorkonfektioniertes Endstück aufnimmt und dieses mittels der Verschlusskappe 41 fixiert. Die Halterung 30 ist zur Aufnahme eines Lichtwellenleiters ausgebildet, welcher mit der Verschlussklappe 32 fixiert wird. Weiter zu erkennen ist im Schutzdeckel 3 ein Faserniederhalter 9, welcher die Fasern während des Spleissvorgangs in entsprechende Ausrichtmittel 22 (siehe Figur 8) zwischen den Halterungen (30, 40) drückt.

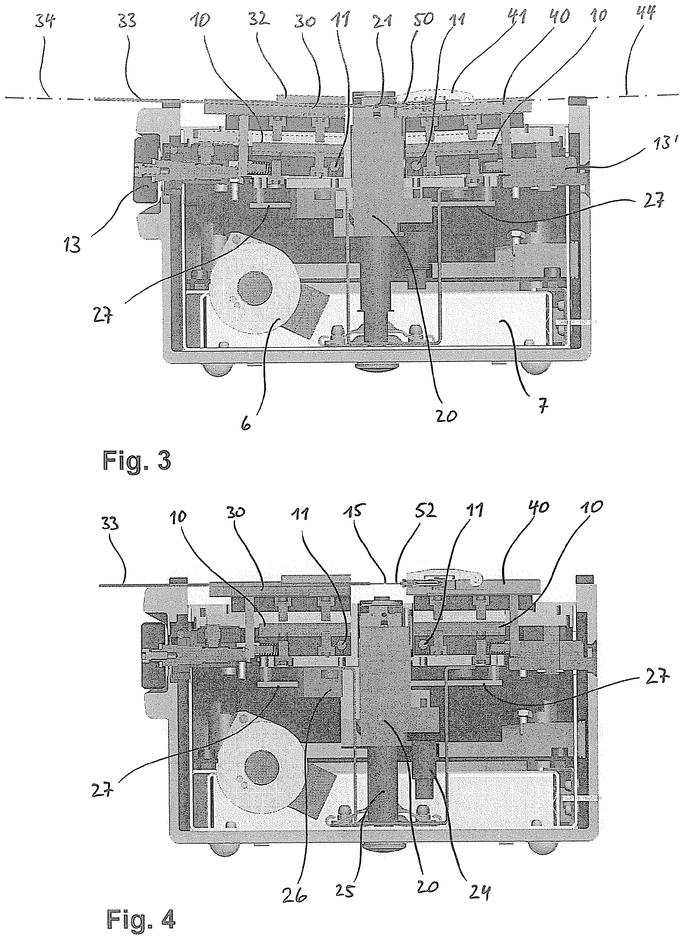

In **Figur 2** ist ein Schnitt durch die Vorrichtung 1 gemäss Figur 1 entlang der Achse der Elektroden 21 dargestellt. Im Innern des Gehäuses 2 ist eine Kamera 23 angeordnet, welche die präzise Ausrichtung der zu spleissenden Lichtwellenleiter auf der Anzeige 4 darstellt. Ein Spleissmodul 20 umfasst das Ausrichtmittel 22 und die Elektroden 21 zum Spleissen. Das Spleissmodul 20 ist weiter mit einer Linearführung 26 (siehe Figur 4), zwei Arretiervorrichtungen 25 und einem Stossdämpfer 24 versehen. Die Linearführung erlaubt ein Absenken des Spleissmoduls 20, sodass nach dem Spleissvorgang die Lichtwellenleiter und die Spleissverbindung freigestellt werden können. Der Stossdämpfer 24 verhindert mit seiner Bremsfunktion ein abruptes Absenken des Spleissmoduls 20. Die Arretiervorrichtungen 25 dienen einerseits dem Arretieren in der Freistellposition und andererseits durch ein eingebautes Federelement dem automatischen Verschieben nach dem Lösen der Arretierung in die Spleissposition. Eine Batterieeinheit 7 dient der Speisung der Kamera 23, der Anzeige 4, eines Hochspannungsgenerators 6 (siehe Figur 3), eines im Schutzdeckel 3 integrierten Leuchtmittels 8 und einer Elektronik für die Steuerung und Auswertung. Der Spleissvorgang kann durch Drücken der entsprechenden Tasten in der Bedieneinheit 5 ausgelöst werden. Im Schutzdeckel 3 ist der Faserniederhalter 9 zu erkennen, welcher die Lichtwellenleiter während des Schweissens auf dem Ausrichtmittel fixiert.

Die **Figur 3** zeigt einen Schnitt durch die Vorrichtung 1 gemäss Figur 1 entlang den Achsen 34 und 44 der Lichtwellenleiter. Die Vorrichtung 1 ist mit dem Spleissmodul 20 in Spleissposition dargestellt, d.h. das Spleissmodul 20 ist so ausgerichtet, dass sich eine Achse durch die Elektroden 21 mit den Achsen 34 und 44 der Lichtwellenleiter schneidet. Die Lichtwellenleiter werden beidseitig der Elektroden 21 von Halterungen 30, 40 aufgenommen.

Die Halterung 30 ist dabei so ausgebildet, dass sie direkt einen Lichtwellenleiter 33 aufnehmen kann und diesen durch Verschliessen der Verschlussklappe 32 auf der Halterung 30 fixiert. Die Halterung 40 ist so ausgebildet, dass sie ein vorkonfektioniertes Endstück 50 aufnehmen kann und dieses Endstück 50 durch Verschliessen der Verschlussklappe 41 fixiert. Die beiden Halterungen 30, 40 sind je auf einer Trägereinheit 10 angeordnet und lösbar mit dieser verbunden. Dabei sind die beiden Trägereinheiten 10 auf einer horizontalen Drehachse 11 kippbar gelagert. Durch Seitenstifte 27 sind die Trägereinheiten 10 mit dem Spleissmodul 20 so wirkverbunden, dass eine Bewegung des Spleissmoduls 20 aus der Freistellposition in die Spleissposition ein Verkippen der beiden Trägereinheiten 10 bewirkt. Dieses Verkippen der Trägereinheiten 10 bewirkt ein winkliges Zusammenführen der zu spleissenden Lichtwellenleiter. Dabei beträgt der Winkel zwischen den Achsen 34, 44 der zu spleissenden Lichtwellenleiter 170° bis 180°, vorzugsweise 174° bis 178°. Für das präzise Zusammenführen der Lichtwellenleiter dient je eine Feinjustierung 13, 13'. Mit diesen Feinjustierungen 13, 13' kann ein genaues Zusammenführen der Enden der Lichtwellenleiter 33, 52 durch Verschiebung der Position der Trägereinheiten 10 und somit der Halterungen 30, 40 und der darin aufgenommenen Lichtwellenleiter 33, 52 parallel zu den Achsen 34, 44 der Lichtwellenleiter 33, 52 erzielt werden. Zur Kontrolle der Positionierung der Lichtwellenleiter dient die Kamera 23 (siehe Figur 2), welche das Bild auf die Anzeige 4 (ebenfalls Figur 2) überträgt. Zur Versorgung der Elektroden 21 mit der entsprechenden Hochspannung für den Spleissvorgang dient der Hochspannungsgenerator 6, welcher seine Energie aus der Batterieeinheit 7 bezieht.

In **Figur 4** ist die Vorrichtung 1 entsprechend der Figur 3 dargestellt, wobei sich das Spleissmodul 20 in der Freistellposition befindet und mit den Arretiervorrichtungen 25 arretiert ist. Die Bewegung des Spleissmoduls 20 aus der Spleissposition in die Freistellposition wird durch eine Linearführung 26 ermöglicht und durch einen Stossdämpfer 24 gebremst. Im gezeigten Ausführungsbeispiel ist das Spleissmodul 20 abgesenkt. Dieses Absenken des Spleissmoduls 20 bewirkt auch ein Absenken der Seitenstifte 27, welche wiederum in Wirkverbindung mit den Trägereinheiten 10 stehen. Dadurch können die Trägereinheiten 10 aus ihrer verkippten Lage zurück in die Horizontale gebracht werden. Weil die Drehachsen 11 der Trägereinheiten 10 tiefer liegen als die in den Halterungen 30, 40 eingespannten Lichtwellenleiter 33, 52, werden diese und insbesondere auch die Spleissverbindung 15 mit einer voreinstellbaren Zugbelastung beaufschlagt. Diese Zugbelastung ist dabei so gewählt, dass die Lichtwellenleiter 33, 52 sowie die Spleissverbindung 15 für das nachfolgende Aufbringen eines mechanischen Schutzes optimal gespannt sind.

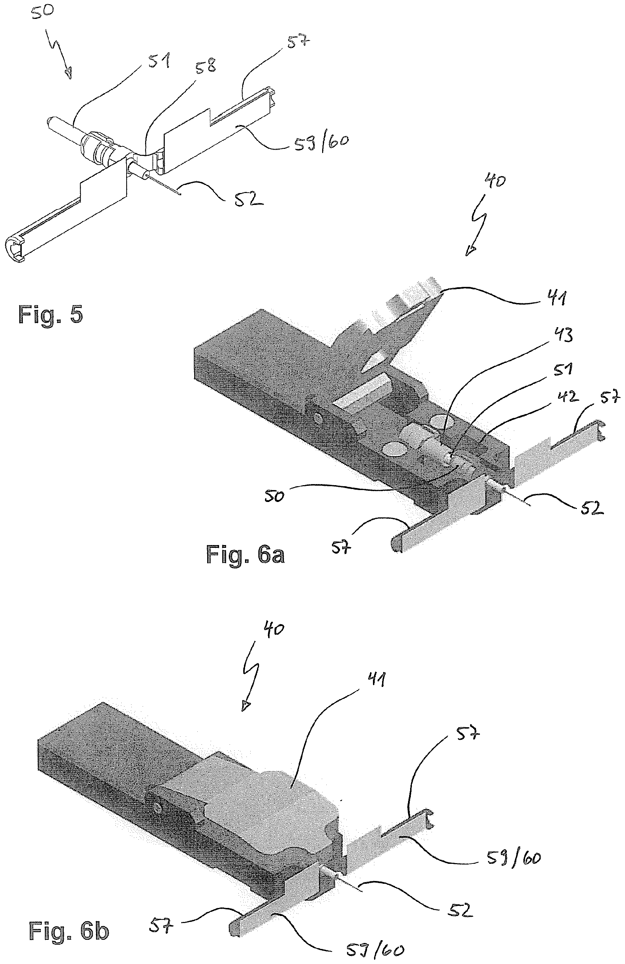

In **Figur 5** ist ein vorkonfektioniertes Lichtwellenleiter-Endstück 50 vor dem Einlegen in eine Halterung 40 (siehe Figur 6a) dargestellt. Das Endstück weist einen Steckerstift 51 auf, in welchem ein Lichtwellenleiter 52 eingeklebt ist. Das Endstück 50 ist mit zwei Mantelteilen 57 versehen, welche mittels je eines Gelenks 58 mit dem Endstück 50 verbunden sind. Die Mantelteile 57 können zusammengeklappt werden, so dass sie den Lichtwellenleiter 52 umhüllen. Die Innenseiten der Mantelteile 57 sind je mit einer Kleberschicht 59 versehen, welche durch eine Schutzfolie 60 abgedeckt ist. Der Lichtwellenleiter 52 ragt auf der dem Steckerstift 51 gegenüberliegenden Seite aus dem Endstück 50 hervor. Dabei ist dieser Lichtwellenleiter 52 so dimensioniert, dass sein Ende in etwa mittig zwischen den Mantelteilen 57 zu liegen kommt, wenn diese zusammengeklappt werden.

**Figur 6a** zeigt eine Halterung 40 zur Aufnahme eines vorkonfektionierten Endstückes 50 mit geöffneter Verschlussklappe 41. Die Halterung 40 weist eine Ausnehmung 42 auf, welche mindestens teilweise den Konturen des Endstücks 50 entspricht. Zur präzisen Führung des Endstücks 50 ist in der Ausnehmung 42 eine Steckerstiftaufnahme 43 ausgebildet, welche den Steckerstift 51 des Endstücks 50 aufnimmt und gleichzeitig gegen Umwelteinflüsse schützt. Der vorkonfektionierte Lichtwellenleiter 52 ragt aus dem Endstück 50 und auch aus der Halterung 40 hervor. Das Endstück 50 wird nur teilweise von der Halterung 40 aufgenommen. Neben dem Lichtwellenleiter 52 ragen auch die beiden Mantelteile 57 aus der Halterung 40 heraus. Um den Lichtwellenleiter 52 für den Spleissvorgang zugänglich zu machen, sind die beiden Mantelteile mit einem Gelenk mit dem Endstück 50 verbunden. Somit wird ermöglicht, dass die beiden Mantelteile seitlich vom Lichtwellenleiter 52 abstehen und wie gezeigt in abgewinkelter Position stehen.

**Figur 6b** zeigt die Halterung 40 gemäss Figur 6a, jedoch mit geschlossener Verschlussklappe 41. Vom Endstück sind nur die beiden Mantelteile 57, welche nach dem Spleissen den mechanischen Schutz der Spleissverbindung ermöglichen und der Lichtwellenleiter 52, welcher aus der Halterung 40 hervorragt, sichtbar. Die Mantelteile 57 sind mit einer Kleberschicht 59 versehen, welche durch eine abziehbare Schutzfolie 60 geschützt ist.

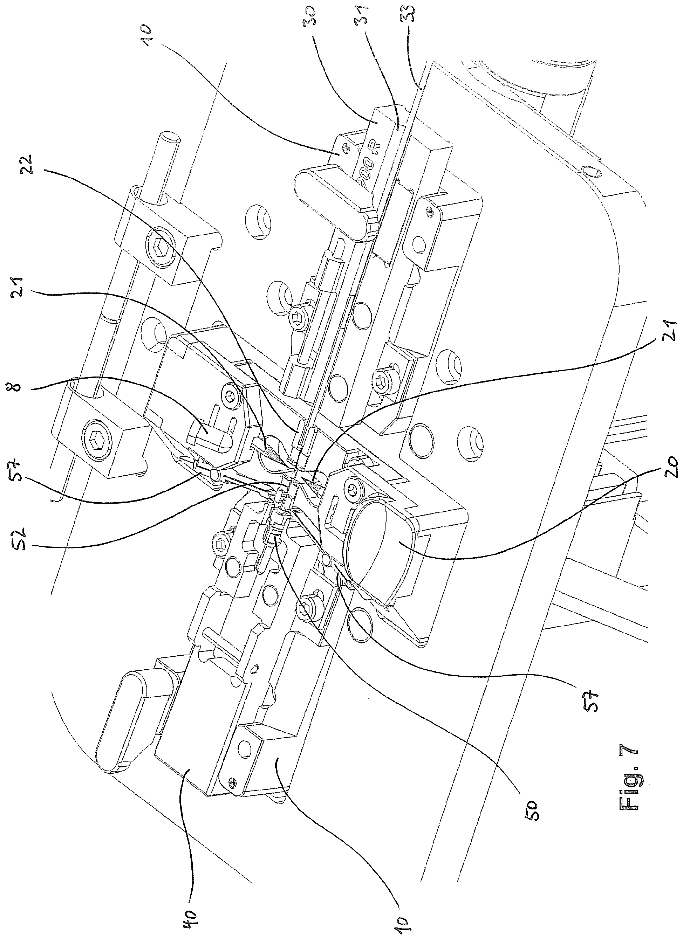

In **Figur 7** ist eine vergrösserte Ansicht des Arbeitsbereiches der Vorrichtung 1 gemäss Figur 1 dargestellt. Dabei sind der Schutzdeckel und die beiden Verschlussklappen der Halterungen 30, 40 entfernt. Das Spleissmodul 20 befindet sich in Spleissposition. Die beiden Halterungen 30, 40 sind je auf ihren Trägereinheiten 10 aufgesetzt. Die Ebenen der beiden Trägereinheiten 10 sind gegeneinander verkippt. In der Halterung 40 ist ein Endstück 50 eingelegt und die beiden Mantelteile 57 des Endstücks 50 sind weit abgewinkelt, sodass der Lichtwellenleiter 52 frei zwischen die Elektroden 21 des Spleissmoduls 20 ragt. In der Halterung 30 ist ein Lichtwellenleiter 33 in einer Nut 31 eingelegt. Die beiden Lichtwellenleiter 52, 33 werden im Bereich zwischen den Elektroden 21 durch ein Ausrichtmittel 22 in Form einer V-Nut aufeinander ausgerichtet. Eine axiale Ausrichtung erfolg mithilfe der Feinjustierungen 13, 13' (siehe Figur 3). Zur visuellen Kontrolle der Ausrichtung dient die Kamera 23 (siehe Figur 2), welche die Enden der beiden Lichtwellenleiter 52, 33 vergrössert auf der Anzeige 4 (siehe Figur 2) darstellt. Damit die Kamera genügend Licht zum Erkennen der beiden Lichtwellenleiter 33, 52 hat, ist im Schutzdeckel 3 (siehe Figur 2) eine Leuchtdiode 8 als Leuchtmittel integriert. Diese Leuchtdiode 8 ist frei schwebend eingezeichnet, jedoch in Wirklichkeit im Schutzdeckel integriert.

**Figur 8** zeigt die Ansicht gemäss Figur 7, wobei das Spleissmodul 20 in der Freistellposition dargestellt ist. Die Elektroden 21 und das Ausrichtmittel 22 sind mit dem Spleissmodul 20 abgesenkt. Die Spleissverbindung 15 ist freigestellt und die beiden Mantelteile 57 sind noch immer von der Spleissverbindung 15 abgewinkelt. Durch Abziehen der Schutzfolien 60 von den Kleberschichten 59 der Mantelteile 57 wird die Kleberschicht 59 freigelegt, welche beim Zusammenklappen der beiden Mantelteile 57 diese untereinander verkleben und die Spleissverbindung fest umschliessen.

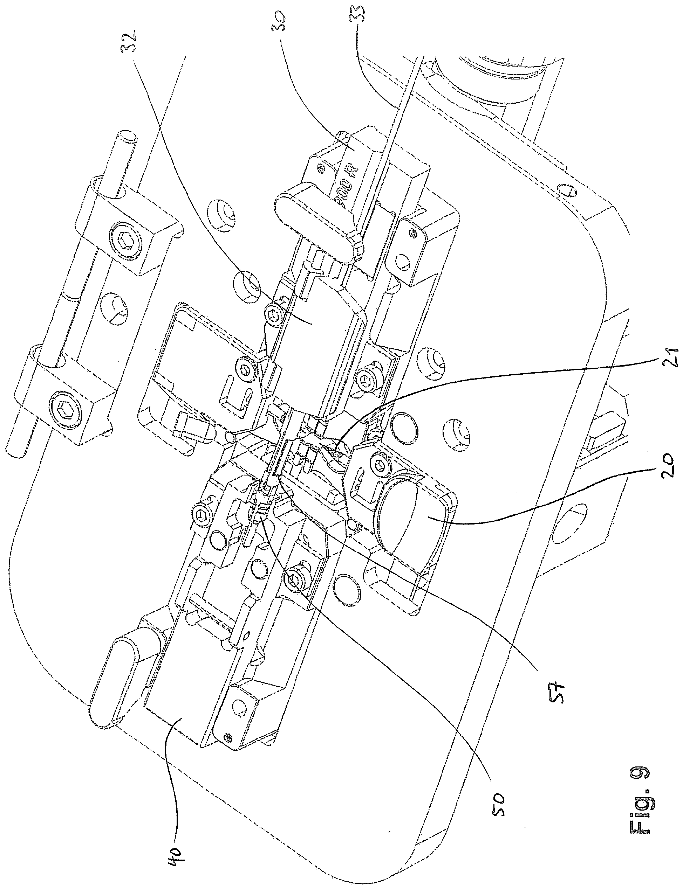

**Figur 9** zeigt die Ansicht gemäss Figur 8, jedoch mit verschlossenen Mantelteilen 57. Das Spleissmodul 20 mit den Elektroden 21 und dem Ausrichtmittel 22 ist noch immer in der Freistellposition abgesenkt. Die beiden Mantelteile 57 des Endstücks 50 sind zusammengeklappt und verklebt. Sie bilden sowohl einen mechanischen Schutz als auch einen Schutz vor Witterungs- und Umwelteinflüssen, wie beispielsweise vor Feuchtigkeit und Staub. Durch Öffnen der Verschlussklappe (nicht dargestellt) der Halterung 40 und der Verschlussklappe 32 der Halterung 30 kann das fertig konfektionierte Endstück 50 mit den gespleissten Lichtwellenleitern entnommen werden. Dabei verhindern die verschlossenen Mantelteile 57 eine Beschädigung der empfindlichen Spleissverbindung.

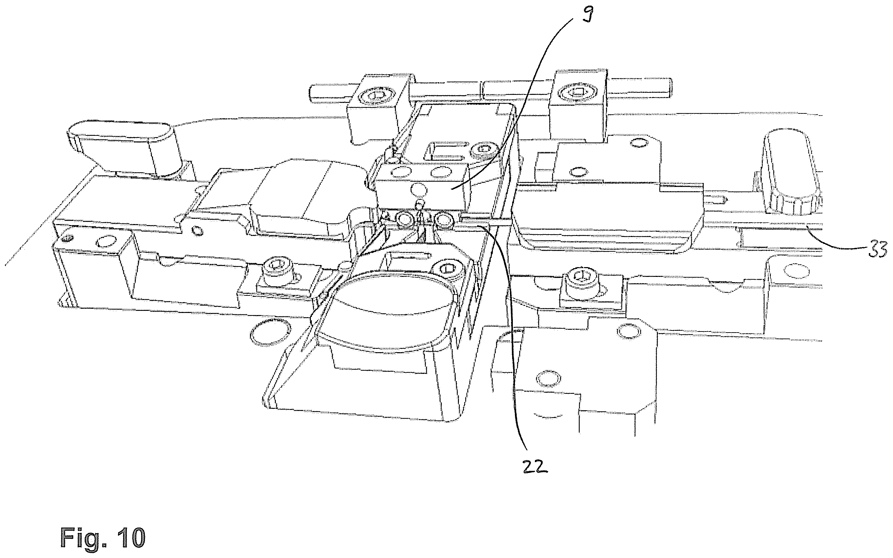

In **Figur 10** ist eine weitere vergrösserte Ansicht des Arbeitsbereiches der Vorrichtung 1 gemäss Figur 1 dargestellt. Dabei ist der Faserniederhalter 9, welcher im Schutzdeckel 3 (siehe Figur 2) integriert ist separat dargestellt. Dieser Faserniederhalter 9 dient dem Fixieren der beiden Lichtwellenleiter 33, 52 im Ausrichtmittel 22 während des Spleissens. Dabei weist der Faserniederhalter 9 schwimmend gelagerte walzenförmige Kontaktelemente auf, welche die Lichtwellenleiter 33, 52 in die V-Nut des Ausrichtmittels 22 im Bereich der Enden der Lichtwellenleiter 33, 52 fixieren.

## Patentansprüche

1. Vorrichtung (1) zum Spleissen von Lichtwellenleitern (33, 52), **gekennzeichnet durch**:
- eine erste und eine zweite Halterung (30, 40) zur direkten oder indirekten Aufnahme wenigstens je eines Lichtwellenleiters (33, 52),
- ein Ausrichtmittel (22) zum aufeinander Ausrichten der Enden der in der ersten und in der zweiten Halterung (30, 40) aufgenommenen Lichtwellenleiter (33, 52),
- Elektroden (21) im Bereich der aufeinander ausgerichteten Enden der Lichtwellenleiter (33, 52) zum Erzeugen der Spleissverbindung (15),
- wobei die beiden Halterungen (30, 40) einerseits und das Ausrichtmittel (22) und die Elektroden (21) andererseits,
- derart zwischen einer Spleissposition und einer Freistellposition relativ zueinander bewegbar sind,
- dass in der Freistellposition die Spleissverbindung (15) freigestellt ist,
- wobei das Ausrichtmittel (22) und die Elektroden (21) von den feststehenden Halterungen (30, 40) wegbewegbar sind.

2. Vorrichtung (1) nach Anspruch 1, **dadurch gekennzeichnet, dass** das Ausrichtmittel (22) und die Elektroden (21) auf einem zwischen den Halterungen (30, 40) gelagerten Spleissmodul (20) angeordnet sind.

3. Vorrichtung (1) nach Anspruch 2, **dadurch gekennzeichnet, dass** das Spleissmodul (20) absenkbar ist.

4. Vorrichtung (1) nach Anspruch 2 oder 3, **dadurch gekennzeichnet, dass** das Spleissmodul (20) gegen eine Vorspannkraft von der Spleissposition in die Freistellposition wegbewegbar und in der Freistellposition arretierbar ist.

5. Vorrichtung (1) nach Anspruch 4, **dadurch gekennzeichnet, dass** das Spleissmodul (20) mit einer Arretiervorrichtung in der Freistellposition arretierbar ist, die bei Druck gegen die Vorspannkraft die Arretierung löst.

6. Vorrichtung (1) nach einem der Ansprüche 1 bis 5, **dadurch gekennzeichnet, dass** jede der beiden Halterungen (30, 40) auf einer Trägereinheit (10) angeordnet und lösbar mit dieser verbunden ist.

7. Vorrichtung (1) nach Anspruch 6, **dadurch gekennzeichnet, dass** die Trägereinheiten (10) auf Ebenen liegen, die relativ zueinander kippbar sind.

8. Vorrichtung (1) nach Anspruch 7, **dadurch gekennzeichnet, dass** die Trägereinheiten (10) an einer horizontalen Drehachse (11) senkrecht zu den Achsen (34, 44) der in den Halterungen (30, 40) aufzunehmenden Lichtwellenleiter gelagert sind.

9. Vorrichtung (1) nach Anspruch 7 oder 8, **dadurch gekennzeichnet, dass** die Trägereinheiten (10) derart mit dem Bewegungsmechanismus zum Erreichen der Freistellposition in Wirkverbindung stehen, dass die Trägereinheiten (10) beim Bewegen von der Freistellposition in die Spleissposition verkippen.

10. Vorrichtung (1) nach einem der Ansprüche 1 bis 9, **dadurch gekennzeichnet, dass** wenigstens eine der beiden Halterungen (30, 40) eine Ausnehmung (42) aufweist, in der ein Endstück (50) passgenau aufnehmbar ist, das einen Lichtwellenleiter (52) enthält.

11. Verfahren zum Spleissen von Lichtwellenleitern (33, 52) mit einer Vorrichtung (1) zum Spleissen, insbesondere gemäss einem der Ansprüche 1 bis 9, umfassend die Schritte:
- direktes oder indirektes Einlegen der Lichtwellenleiter (33, 52) in eine erste und eine zweite Halterung (30, 40) der Vorrichtung (1),
- Ausrichten der Enden der in den Halterungen (30, 40) eingelegten Lichtwellenleiter (33, 52) in einem Ausrichtmittel (22),
- Erzeugen eines Lichtbogens zwischen zwei Elektroden (21) und Erstellen einer Spleissverbindung (15) durch Zusammenspleissen der Enden der Lichtwellenleiter (33, 52),
- Freistellen der Spleissverbindung (15) durch eine Relativbewegung der beiden Halterungen (30, 40) einerseits und dem Ausrichtmittel (22) und der Elektroden (21) andererseits zwischen einer Spleissposition und einer Freistellposition,
- Aufbringen eines mechanischen Schutzes (57) auf die Spleissverbindung (15),
- Entnehmen der Lichtwellenleiter (33, 52) aus den Halterungen (30, 40) der Vorrichtung (1)
**dadurch gekennzeichnet, dass** für das Freistellen der Spleissverbindung (15) das Ausrichtmittel (22) und die Elektroden (21) wegbewegt, vorzugsweise abgesenkt werden.

12. Verfahren nach Anspruch 11, **dadurch gekennzeichnet, dass** nach dem Spleissen der Lichtwellenleiter (33, 52) und vor und während dem Aufbringen des mechanischen Schutzes (57), die Lichtwellenleiter (33, 52) einer vordefinierten Zugspannung ausgesetzt werden.

13. Verwendung eines Endstücks (50) enthaltend:
- einen im Endstück (50) vorkonfektionierten und einseitig am Endstück (50) zugänglichen Lichtwellenleiter (52) und
- Mantelteile (57), welche mit dem Endstück (50) mit einem Gelenk (58) verbunden sind
in einer Vorrichtung (1) nach Anspruch 1, wobei die Mantelteile (57) in der Freistellposition um die Spleissverbindung (15) geschlossen und miteinander verbunden werden.

## Claims

1. Device (1) for splicing optical fibers (33, 52), **characterized by**:
- a first and a second holder (30, 40) for directly or indirectly receiving at least one optical fiber (33, 52) each,
- an aligning means (22) for aligning with one another the ends of the optical fibers (33, 52) received in the first and the second holder (30, 40),
- electrodes (21) in the region of the mutually aligned ends of the optical fibers (33, 52) to create the spliced connection (15),
- the two holders (30, 40) on the one hand and the aligning means (22), and the electrodes (21), on the other hand
- being movable in relation to one another, between a splicing position and a releasing position, in such a way
- that, in the releasing position, the spliced connection (15) is released,
- the aligning means (22), and the electrodes (21), being able to move away from the fixed holders (30, 40).

2. Device (1) according to Claim 1, **characterized in that** the aligning means (22) and the electrodes (21) are arranged on a splicing module (20) mounted between the holders (30, 40).

3. Device (1) according to Claim 2, **characterized in that** the splicing module (20) can be lowered.

4. Device (1) according to Claim 2 or 3, **characterized in that** the splicing module (20) can be moved away from the splicing position into the releasing position against a prestressing force and can be arrested in the releasing position.

5. Device (1) according to Claim 4, **characterized in that** the splicing module (20) can be arrested in the releasing position by an arresting device which releases the arrestment when there is pressure against the prestressing force.

6. Device (1) according to one of Claims 1 to 5, **characterized in that** each of the two holders (30, 40) is arranged on a carrier unit (10) and releasably connected to it.

7. Device (1) according to Claim 6, **characterized in that** the carrier units (10) lie on planes which can be tilted in relation to one another.

8. Device (1) according to Claim 7, **characterized in that** the carrier units (10) are mounted on a horizontal spindle (11) perpendicular to the axes (34, 44) of the optical fibers to be received in the holders (30, 40).

9. Device (1) according to Claim 7 or 8, **characterized in that,** to reach the releasing position, the carrier units (10) are in operative connection with the movement mechanism in such a way that the carrier units (10) tilt as they move from the releasing position into the splicing position.

10. Device (1) according to one of Claims 1 to 9, **characterized in that** at least one of the two holders (30, 40) has a recess (42), in which an end piece (50) which contains an optical fiber (52) can be received with an exact fit.

11. Method for splicing optical fibers (33, 52) by a device (1) for splicing, in particular according to one of Claims 1 to 9, comprising the steps of:
- directly or indirectly placing the optical fibres (33, 52) into a first and a second holder (30, 40) of the device (1),
- aligning the ends of the optical fibers (33, 52) placed in the holders (30, 40) in an aligning means (22),
- producing an arc between two electrodes (21), and obtaining a spliced connection (15) by splicing together the ends of the optical fibers (33, 52),
- releasing the spliced connection (15) by a relative movement of the two holders (30, 40) on the one hand and the aligning means (22), and the electrodes (21), on the other hand between a splicing position and a releasing position,
- applying a mechanical protection (57) to the spliced connection (15),
- removing the optical fibers (33, 52) from the holders (30, 40) of the device (1),
**characterized in that,** for releasing the spliced connection (15), the aligning means (22), and the electrodes (21), are moved away, preferably lowered.

12. Method according to Claim 11, **characterized in that,** after the splicing of the optical fibres (33, 52) and before and during the application of the mechanical protection (57), the optical fibres (33, 52) are subjected to a predefined tensile stress.

13. Use of an end piece (50) containing:
- an optical fiber (52) which is prefabricated in the end piece (50) and accessible on one side of the end piece (50), and
- sheath parts (57), which are connected to the end piece (50) by a joint (58)
in a device (1) according to Claim 1, the sheath parts (57) being closed around the spliced connection (15) and connected to one another in the releasing position.

## Revendications

1. Dispositif (1) destiné à l'épissage de fibres optiques (33, 52), **caractérisé par** :
- un premier support et un deuxième support (30, 40), lesquels sont destinés au logement direct ou indirect d'au moins une fibre optique (33, 52) chacun ;
- un moyen d'alignement (22), lequel est destiné à l'alignement, les unes par rapport aux autres, des extrémités des fibres optiques (33, 52) qui sont logées dans le premier support et dans le deuxième support (30, 40) ;
- des électrodes (21) situées au niveau des extrémités des fibres optiques (33, 52), lesquelles sont alignées les unes par rapport aux autres, en vue de la réalisation de la jonction de l'épissure (15) ;
- dans lequel les deux supports (30, 40), d'une part, et le moyen d'alignement (22) et les électrodes (21), d'autre part,
- peuvent être déplacés, les uns par rapport aux autres, entre une position d'épissage et une position de dégagement, de telle sorte
- que la jonction de l'épissure (15) est dégagée dans la position de dégagement ;
- dans lequel le moyen d'alignement (22) et les électrodes (21) peuvent être éloignés des supports (30, 40) fixes.

2. Dispositif (1) selon la revendication 1, **caractérisé en ce que** le moyen d'alignement (22) et les électrodes (21) sont disposés sur un module d'épissage (20) qui est positionné entre les supports (30, 40).

3. Dispositif (1) selon la revendication 2, **caractérisé en ce que** le module d'épissage (20) peut être abaissé.

4. Dispositif (1) selon la revendication 2 ou 3, **caractérisé en ce que** le module d'épissage (20) peut être éloigné de la position d'épissage dans la position de dégagement contre une force de précontrainte et peut être bloqué dans la position de dégagement.

5. Dispositif (1) selon la revendication 4, **caractérisé en ce que** le module d'épissage (20) peut être bloqué dans la position de dégagement au moyen d'un dispositif de blocage, lequel libère le blocage quand une pression est exercée contre la force de précontrainte.

6. Dispositif (1) selon l'une des revendications 1 à 5, **caractérisé en ce que** chacun des deux supports (30, 40) est disposé sur une unité de support (10) et est relié de manière amovible avec cette dernière.

7. Dispositif (1) selon la revendication 6, **caractérisé en ce que** les unités de support (10) reposent sur des plans qui peuvent être basculés les uns par rapport aux autres.

8. Dispositif (1) selon la revendication 7, **caractérisé en ce que** les unités de support (10) sont positionnées au niveau d'un axe de rotation (11) horizontal, à la perpendiculaire des axes (34, 44) des fibres optiques devant être logées dans les supports (30, 40).

9. Dispositif (1) selon la revendication 7 ou 8, **caractérisé en ce que** les unités de support (10) sont en liaison active avec le mécanisme de déplacement en vue d'atteindre la position de dégagement, de telle sorte que les unités de support (10) sont basculées, lors du mouvement, de la position de dégagement dans la position d'épissage.

10. Dispositif (1) selon l'une des revendications 1 à 9, **caractérisé en ce qu'**au moins l'un des deux supports (30, 40) présente un évidement (42), dans lequel peut venir se loger dans un ajustement parfait un embout (50) qui contient une fibre optique (52).

11. Procédé destiné à l'épissage de fibres optiques (33, 52) avec un dispositif (1) destiné à l'épissage, en particulier conformément à l'une des revendications 1 à 9, lequel procédé comprend les phases suivantes :
- la mise en place directe ou indirecte des fibres optiques (33, 52) dans un premier support et un deuxième support (30, 40) du dispositif (1) ;
- l'alignement dans un moyen d'alignement (22) des extrémités des fibres optiques (33, 52) qui sont mises en place dans les supports (30, 40) ;
- la production d'un arc électrique entre deux électrodes (21) et l'établissement d'une jonction de l'épissure (15) par l'intermédiaire d'un épissage commun des extrémités des fibres optiques (33, 52) ;
- le dégagement de la jonction de l'épissure (15) par l'intermédiaire d'un mouvement relatif des deux supports (30, 40), d'une part, et du moyen d'alignement (22) et des électrodes (21), d'autre part, entre une position d'épissage et une position de dégagement ;
- la mise en place d'une protection mécanique (57) sur la jonction de l'épissure (15) ;
- le retrait des fibres optiques (33, 52) hors des supports (30, 40) du dispositif (1) ;
**caractérisé en ce que** le moyen d'alignement (22) et les électrodes (21) sont éloignés les uns des autres pour le dégagement de la jonction de l'épissure (15) et sont, de préférence, abaissés.

12. Procédé selon la revendication 11, **caractérisé en ce que** les fibres optiques (33, 52) sont soumises à une contrainte de traction prédéfinie à l'issue de l'épissage des fibres optiques (33, 52), ainsi qu'avant et pendant la mise en place de la protection mécanique (57) .

13. Utilisation d'un embout (50) contenant :
- une fibre optique (52) laquelle est préalablement confectionnée dans l'embout (50) et laquelle est accessible depuis un seul côté au niveau de l'embout (50) ; et
- des parties de gainage (57), lesquelles sont reliées à l'embout (50) par l'intermédiaire d'une articulation (58) ;
dans un dispositif (1) selon la revendication 1, dans laquelle les parties de gainage (57) sont, dans la position de dégagement, refermées autour de la jonction de l'épissure (15) et reliées les unes aux autres.
